# EUROPÄISCHE PATENTSCHRIFT

(11) **EP 0 659 637 B1**
(45) Veröffentlichungstag und Bekanntmachung des Hinweises auf die Patenterteilung: **12.08.1998**
(21) Anmeldenummer: 94119266.8
(22) Anmeldetag: 07.12.1994
(51) Int. Cl.: B63B 59/00, B63H 1/10, F16C 17/24, F16C 33/04

(54) **Schiffs-Verstellpropeller mit Korrosionsschutz**
Adjustable ship propeller with corrosion protection
Hélice propulsive réglable avec protection contre la corrosion

(30) Priorität: 23.12.1993 DE 4344166
(43) Veröffentlichungstag der Anmeldung: 28.06.1995
(73) Patentinhaber: J.M. Voith GmbH, D-89522 Heidenheim (DE)
(72) Erfinder: Fork, Werner, D-89520 Heidenheim (DE)
(74) Vertreter: Weitzel, Wolfgang, Dr.-Ing. Patentanwalt

(56) Entgegenhaltungen:
- DE-A- 2 520 948
- DE-A- 3 435 821
- DE-C- 718 462
- DE-C- 899 179
- DE-C- 3 509 572
- PATENT ABSTRACTS OF JAPAN vol. 6, no. 139 (C-116) 28. Juli 1982 & JP-A-57 063 681 (HITACHI ZOSEN CORP.) 17. April 1982

## Beschreibung

Die Erfindung betrifft eine Einrichtung an Schiffs-Verstellpropellern entsprechend dem Oberbegriff des Patentanspruchs 1.

An Schiffs-Verstellpropeller-Radkörpern treten immer wieder stärkere Korrosionsschäden auf, besonders im Schwenkbereich der Flügel. Diese Schäden werden auf die elektrolytischen Potentialunterschiede zwischen den Flügeln (Werkstoff 1.4313 oder Bronze) und dem Radkörper (niedrig legierter Kohlenstoffstahl R-St 37-2) zurückgeführt. In der Literatur sind folgende elktrolytische Potentiale bezogen auf Kohlenstoffstahl zu finden (Saar-Metallwerke, VG-Norm)

| | |
|---|---|
| - 1.4313 | 500 mV |
| - Bronze (Al-Bz) | 495 mV |
| - R-St 37-2 | 0 mV |

Es kann auch der Radkörper aus "edlerem" Material als die Flügel sein.
Bisher wurde versucht, die Korrosion aus den Potentialströmen durch Opferanoden und durch einen möglichst gut deckenden Anstrich oder Beschichtung des Radkörpers zu minimieren. Das hatte jedoch nur begrenzt Erfolg, da
- die Opferanoden im unmittelbaren Einflußbereich der Flügel keine ausreichende Wirkung mehr haben, und da
- der Anstrich durch die mechanische Beanspruchung der Strömung im Bereich der Flügel punktuell beschädigt wird.

Gerade der Bereich, der für die sichere Funktion des Schiffspropellers besonders wichtig ist - die Abdichtung der Flügel - wird somit durch die elektrolytische Korrosion besonders angegriffen. Eine quantitative Ermittlung der Stromdichte an den drei beteiligten Oberflächen, Radkörper, Flügel und Opferanode ist unter der Annahme einer vollständig geschützten oder vollständig ungeschützten Oberfläche sicherlich möglich; die unsichere Teilbeschichtung des Radkörpers würde jedoch eine Bestimmung der Potentialströme erheblich erschweren.

Bei einer Betrachtung der Gefährdung sind folgende Einflußfaktoren für die Korrosion am Radkörper zu beachten:
- Größe der freiliegenden Oberfläche des Radkörpers (je geringer, desto intensivere Korrosion)
- Leitfähigkeit des Elektrolyten (Seewasser)

Daher ergibt sich auch ein sehr unterschiedliches Korrosionsverhalten am Schiffspropeller.

Die Aufgabe der Erfindung ist es, einen besseren Korrosionsschutz für Verstellpropeller von Schiffen anzugeben. Diese Aufgabe wird erfindungsgemäß durch die Merkmale des kennzeichnenden Teils des Patentanspruchs 1 gelöst.

Durch die erfindungsgemäße Maßnahme wird erreicht, daß am Radkörper nur noch der Schutzstrom der Opferanoden wirkt, wobei an den Opferanoden nur ein reduzierter anodischer Strom auftritt. Der Radkörper ist somit kathodisch geschützt, wobei noch der Vorteil auftritt, daß die Opferanoden langsamer aufgezehrt werden.

Nachfolgend wird die Erfindung anhand den Figuren der Zeichnung erläutert, wobei Figur 1 prinzipiell einen Radkörper eines Zykloidal-Schiffspropellers in Seitenansicht bzw. Teilschnitt und Figur 2 und 3 im Axialschnitt die Flügellagerung am Schaft des Flügels darstellen.

Der Radkörper 1 des Schiffspropellers trägt die Propellerflügel 2 über deren Schäfte 8. Es ist eine obere Lagerbüchse 11 in einem an der oberen Deckplatte 4 des Radkörpers 1 befestigten Deckel 38 sowie eine untere Lagerbüchse 10 in einem Lagerträger 37 auf dem Flügelschaft vorgesehen; dabei ist der innere Lagerträger 37 von einem sich wiederum an der unteren Platte 6 des Radkörpers 1 abstützenden äußeren Lagerträger umfaßt. Die Erfindung ist ja hier in Bezug auf einen Zykloidal-Schiffspropeller beschrieben, daher ist hier auch eine zur Verstellung des jeweiligen Propellerflügels dienende Kuppelstange 18 vorgesehen, die über einen Bolzen 16 an den Gabelstücken 19 und 20 eines mit dem Propellerschaft 8 verbundenen Hebels angreift, der an dem Propellerschaft mittels Klemmflanschen 61 und Spannschraube 62 festgeklemmt ist. Am unteren Ende der Lagerung befindet sich ein Dichtungsträger 58, der Dichtungen 65 trägt. Der Propellerschaft ist nun durch die nachstehend geschilderten Maßnahmen oder Bauteile gegen die Radkörperteile bzw. die Kuppelstange isoliert. Auf den Lagerbüchsen 10 und 11 befindet sich radial außen eine Isolierschicht 54 bzw. 56. Dadurch werden in radialer Richtung die Lagerbüchsen gegen die Lagerteile (Lagergehäuse) 37 bzw. Deckel 38 elektrisch isoliert. Der Isolierwiderstand der Isolierschicht soll mindestens 10000 Ohm betragen. Diese Isolierschicht kann vorzugsweise eine Keramikschicht, z.B. Oxidkeramik oder ein Karbid sein. In gleicher Art sind die Lagerbuchsen 15 in dem Lagerauge 39 der Kuppelstange 18 mit einer Isolierschicht 55 eingeschrumpft. Es sind ferner noch Isolierscheiben für Isolierung in axialer Richtung vorgesehen, und zwar Isolierscheibe 50 an der unteren Lagerbüchse 10 gegenüber dem Lagerträger 37 sowie weitere Isolierscheiben 51 und 52 zwischen Lagerbuchse 15 der Kuppelstange und den Gabelstücken 19 und 20 des am Schaft des Flügels befestigten Hebels.

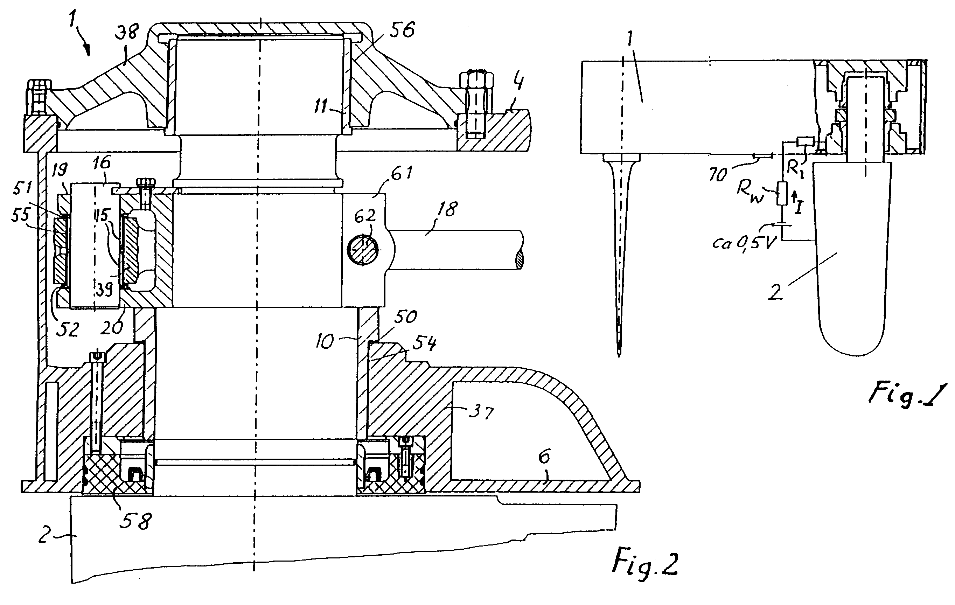

In Figur 1 ist dazu angedeutet, wie sich der elektrische Stromkreis aufbaut. Dabei ist mit R_{L} der Widerstand der Lagerung und mit R_{W} der Widerstand des Meerwasser und mit I der elektrolytische Strom angedeutet. Dabei beträgt der Widerstand R_{W} etwa 0,5 Ohm, und es ist eine Spannung zwischen den Flügeln und dem Radkörper entsprechend der elektrischen Spannungsreihe von etwa 0,5 V vorhanden.

Diesen Potentialen ist noch das Schutzpotential der Opferanode 70 zum Radkörper 1 überlagert.

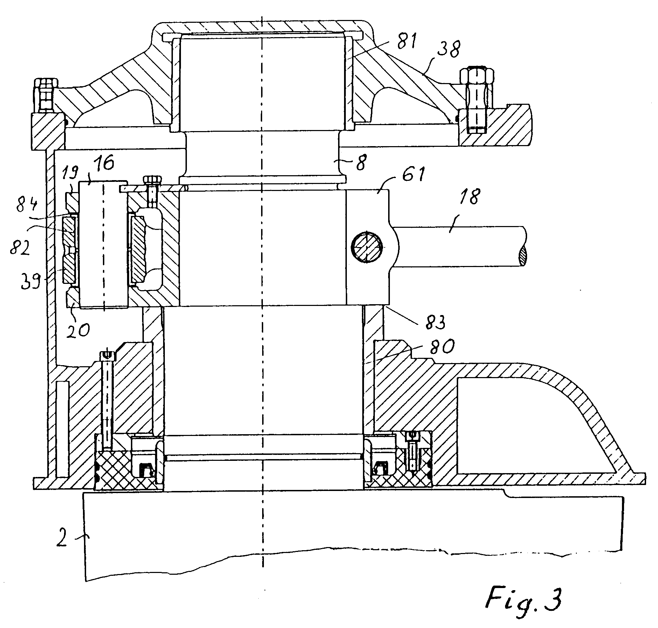

Die Isolierschicht kann auch in den Gleitflächen der Lagerstellen liegen (siehe Figur 3, bei 80-84).

## Patentansprüche

1. Verstell-Schiffspropeller, insbesondere Zykloidal-Schiffspropeller, mit zum Schutz desselben gegen Korrosion, dadurch gekennzeichnet, daß an den Lagerstellen (10, 11, 15) an den Propellerflügeln Isolierflächen (54, 55, 56) bzw. Isolierteile (50, 51, 52) angeordnet sind, die die Propellerflügel (2) von den Lagerträgern (37, 38, 39) elektrisch isolieren bzw. den Stromübergang zu diesen durch ihren hohen elektrischen Widerstand auf für elektrolytische Korrosion ungefährliche Werte herabsetzen.

2. Verstell-Schiffspropeller, insbesondere Zykloidal-Schiffspropeller, mit Einrichtung nach Anspruch 1, dadurch gekennzeichnet, daß die Isolierflächen eine Isolierbeschichtung (54, 55, 56) an den Lagerbuchsen (10, 11, 15) im Bereich der Schäfte (23) der Propellerflügel (2) sind.

3. Verstell-Schiffspropeller, insbesondere Zykloidal-Schiffspropeller, mit Einrichtung nach Anspruch 1 oder 2, dadurch gekennzeichnet, daß die Isolierbeschichtung aus keramischem Werkstoff, wie Oxidkeramik oder Karbid besteht.

4. Verstell-Schiffspropeller, insbesondere Zykloidal-Schiffspropeller, mit Einrichtung nach einem der Ansprüche 1-3, dadurch gekennzeichnet, daß die Isolierbeschichtung radial außen an den Lagerbuchsen vorgesehen ist.

5. Verstell-Schiffspropeller, insbesondere Zykloidal-Schiffspropeller, mit Einrichtung nach einem der Ansprüche 1-4, dadurch gekennzeichnet, daß in axialer Richtung die Lagerbuchsen durch Isolierscheiben (50, 51, 52) von den Lagerträgern getrennt sind.

6. Verstell-Schiffspropeller, insbesondere Zykloidal-Schiffspropeller, mit Einrichtung nach einem der Ansprüche 1-4, dadurch gekennzeichnet, daß bei einem Zykloidal-Schiffspropeller die flügelseitige Lagerbuchse (15) der zur Verstellung des einzelnen Flügels (2) dienenden Kuppelstange (18) in axialer Richtung durch Isolierscheiben (51, 52) gegen den mit dem Flügelschaft (8) verbundenen Stellhebel (19, 20) desselben elektrisch isoliert ist.

## Claims

1. Variable-pitch ship's propeller, in particular cycloidal ship's propeller, with a device for protecting same against corrosion, characterised in that insulating surfaces (54, 55, 56) or insulating parts (50, 51, 52) are located at the bearings (10, 11, 15) on the propeller blades, which insulate the propeller blades (2) electrically from the bearing supports (37, 38, 39) or reduce the passage of current to the latter due to their high electrical resistance, to values which are harmless for electrolytic corrosion.

2. Variable-pitch ship's propeller, in particular cycloidal ship's propeller with a device according to Claim 1, characterised in that the insulating surfaces are an insulating coating (54, 55, 56) on the bearing bushes (10, 11, 15) in the region of the shafts (23) of the propeller blades (2).

3. Variable-pitch ship's propeller, in particular cycloidal ship's propeller with a device according to Claim 1 or 2, characterised in that the insulating coating consists of ceramic material, such as oxide ceramic or carbide.

4. Variable-pitch ship's propeller, in particular cycloidal ship's propeller, with a device according to one of Claims 1 to 3, characterised in that the insulating coating is provided radially on the outside of the bearing bushes.

5. Variable-pitch ship's propeller, in particular cycloidal ship's propeller, with a device according to one of Claims 1 to 4, characterised in that in the axial direction the bearing bushes are separated by insulating discs (50, 51, 52) from the bearing supports.

6. Variable-pitch ship's propeller, in particular cycloidal ship's propeller, with a device according to one of Claims 1 to 4, characterised in that in the case of a cycloidal ship's propeller, the bearing bush (15) adjacent the blade of the connecting rod (18) serving for the adjustment of the individual blade (2) is electrically insulated in the axial direction by insulating discs (51, 52) with respect to the adjusting lever (19, 20) thereof connected to the blade shaft (8).

## Revendications

1. Hélice propulsive réglable, en particulier hélice propulsive cycloïdale comportant un dispositif pour protéger celles-ci contre la corrosion, caractérisé en ce qu'
on dispose sur les emplacements de coussinet (10, 11, 15) sur les ailettes de propulseurs, des surfaces d'isolation (54, 55, 56) ou des pièces d'isolation (50, 51, 52) qui isolent électriquement les pâles d'hélice (2) des supports de coussinet (37, 38, 39), ou qui réduisent le passage du courant vers celles-ci à des valeurs sans danger pour la corrosion électrolytique, grâce à leur résistance électrique élevée.

2. Hélice propulsive réglable, en particulier hélice propulsive cycloïdale comportant un dispositif selon la revendication 1,
caractérisée en ce que
les surfaces d'isolation sont un revêtement isolant (54, 55, 56) sur les bagues de coussinet (10, 11, 15) dans la zone des axes (23) des pâles d'hélice (2).

3. Hélice propulsive réglable, en particulier hélice propulsive cycloïdale comportant un dispositif selon la revendication 1 ou 2,
caractérisée en ce que
le revêtement isolant (54, 55, 56) est formé de matériau céramique, comme des céramiques oxydées ou un carbure.

4. Hélice propulsive réglable, en particulier hélice propulsive cycloïdale comportant un dispositif selon la revendication 1 ou 2,
caractérisée en ce que
la couche d'isolation est disposée radialement vers l'extérieur sur les bagues de coussinet.

5. Hélice propulsive réglable, en particulier hélice propulsive cycloïdale comportant un dispositif selon l'une des revendications 1 à 4
caractérisée en ce que
dans la direction axiale, les coussinets de palier sont séparés par des rondelles isolantes (50, 51, 52) des supports pour coussinets.

6. Hélice propulsive réglable, en particulier hélice propulsive cycloïdale comportant un dispositif selon l'une des revendications 1 à 4,
**caractérisée en ce que**
dans une hélice propulsive cycloïdale, le coussinet du côté des ailettes (15) des tiges de couplage (18), qui sert pour le réglage de pâle individuelle (2) est isolé électriquement dans la direction axiale par des rondelles isolantes (51, 52) contre le levier de réglage (19, 20) relié à l'axe de la pâle (8), de celui-ci.
